# EUROPEAN PATENT APPLICATION

(11) **EP 2 911 087 A1**
(43) Date of publication of application: **26.08.2015**
(21) Application number: 14812395.3
(22) Date of filing: 11.07.2014
(51) Int. Cl.: G06F 21/78

(54) **METHOD, DEVICE AND APPARATUS FOR STORING AND READING DATA**

(30) Priority: 20.12.2013 CN 201310713626
(71) Applicant: Huawei Technologies Co., Ltd., Longgang District Shenzhen, Guangdong 518129 (CN)
(72) Inventor: WEI, He, Shenzhen Guangdong 518129 (CN)
(74) Representative: Haley, Stephen
(86) International application number: PCT/CN2014/082098
(87) International publication number: WO 2015/090055

(57) **Abstract**

The present invention discloses data storing and reading methods, apparatuses and devices. The method includes: performing encryption processing on data based on a key when it is determined that a storage mode of the data in a user terminal is a set default hidden storage mode; or receiving an operation instruction for performing security protection for data in a user terminal, and performing, on data for which security protection is to be performed, encryption processing based on a key when it is determined that a storage mode of the data is a non-default hidden storage mode and it is determined that a user who sends the operation instruction is an authorized user; and storing encryption-processed data in a storage area in the user terminal, where the storage area is used to store encrypted data. In this way, the following problems can be properly solved: application of data stored in a user terminal is limited to some extent, and convenience of reading the stored data is relatively poor or security of the data stored in the user terminal is relatively low.

## Description

### TECHNICAL FIELD

The present invention relates to the field of mobile communications technologies, and in particular, to data storing and reading methods, apparatuses and devices.

### BACKGROUND

With ongoing development of communications technologies, user terminals gradually evolve toward smartness. As computing and storage capabilities of a user terminal increase, more personal privacy information of a user who holds a user terminal is stored on the user terminal. For example, the user may store photos or working documents in the user terminal held by the user.

The user terminal held by the user sometimes may go beyond the user's control, for example, be lent or lost. When the user terminal goes beyond the user's control, the user generally expects that the privacy information stored in the user terminal is protected from being seen by other users. In a normal case, protection for data stored in the user terminal is generally implemented in the following manners:

Manner 1: A client having a data protection function is downloaded, corresponding setting is performed to perform encryption processing on data that needs to be protected in the user terminal, such as an image, a video, an SMS message, and a call record, and after the encryption, the encrypted data is stored in a specified storage area of the client. To view the protected data, the user needs to enter an instruction to get access to the client. The stored data can be viewed only after the instruction is entered successfully. In this case, whenever the user needs to view the data, the user needs to enter the instruction to get access to the client, which makes operations complicated and inconvenient.

Manner 2: A screen of the user terminal is encrypted. In this manner, when the user terminal is lost, in a case in which a decryption password of the screen of the user terminal is unknown, it is difficult for a user who picks up the user terminal to view any data stored in the user terminal. However, in this manner, the data stored in the user terminal is less secure, and the user who picks up the user terminal may cancel an encryption password of the screen of the user terminal by other means. In addition, further, in this manner, if the user terminal is lent to another user to use, a borrower can easily view the data stored in the user terminal.

Therefore, application of the data stored in the user terminal is generally limited to some extent, and convenience of reading the stored data is relatively poor or security of the data stored in the user terminal is relatively low.

### SUMMARY

The present invention provides data storing and reading methods, apparatuses, and devices, which can properly solve the following problems: application of data stored in a user terminal is limited to some extent, and convenience of reading the stored data is relatively poor or security of the data stored in the user terminal is relatively low.

According to a first aspect, a data storing method is provided and includes: performing encryption processing on data based on a key when it is determined that a storage mode of the data in a user terminal is a set default hidden storage mode; or receiving an operation instruction for performing security protection for data in a user terminal, and performing, on data for which security protection is to be performed, encryption processing based on a key when it is determined that a storage mode of the data is a non-default hidden storage mode and it is determined that a user who sends the operation instruction is an authorized user; and storing encryption-processed data in a storage area in the user terminal, where the storage area is used to store encrypted data.

With reference to the first aspect, in a first possible implementation manner of the first aspect, the method further includes: when it is determined that the storage mode of the data is a non-hidden storage mode, storing the data in a storage area other than the storage area used to store the encrypted data in the user terminal.

With reference to the first aspect, in a second possible implementation manner of the first aspect, the non-default hidden storage mode includes a selective hidden storage mode; and the performing, on data for which security protection is to be performed, encryption processing based on a key includes: receiving a storage instruction for performing security protection for the data stored in the storage area other than the storage area used to store the encrypted data; and performing, on the data for which security protection is to be performed, encryption processing based on the key and according to the storage instruction.

With reference to the first aspect and the first to the second possible implementation manners of the first aspect, in a third possible implementation manner of the first aspect, the key is determined in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

With reference to the first aspect and the first to the second possible implementation manners of the first aspect, in a fourth possible implementation manner of the first aspect, after the storing encryption-processed data in a storage area in the user terminal, where the storage area is used to store encrypted data, the method further includes: performing decryption processing on the data based on a key when a cancellation instruction sent by the user is received and it is determined that the user who sends the cancellation instruction is an authorized user, where the cancellation instruction is an instruction for canceling the hidden storage mode for any data stored in the storage area used to store the encrypted data.

With reference to the first aspect and the first to the fourth possible implementation manners of the first aspect, in a fifth possible implementation manner of the first aspect, it is determined, in the following manner, that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.

According to a second aspect, a data reading method is provided and includes: receiving a reading instruction for reading data in a user terminal; when it is determined that a storage mode of the data is a hidden storage mode and it is determined that a user who sends the reading instruction is an authorized user, obtaining the data from a storage area used to store encrypted data; performing decryption processing on the obtained data based on a key; and presenting decryption-processed data to the user.

With reference to the second aspect, in a first possible implementation manner of the second aspect, the key is determined in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

With reference to the second aspect and the first possible implementation manner of the second aspect, in a second possible implementation manner of the second aspect, it is determined, in the following manner, that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.

According to a third aspect, a data storing apparatus is provided and includes: an encryption processing unit, configured to perform encryption processing on data based on a key when it is determined that a storage mode of the data in a user terminal is a set default hidden storage mode; or receive an operation instruction for performing security protection for data in a user terminal, and perform, on data for which security protection is to be performed, encryption processing based on a key when it is determined that a storage mode of the data is a non-default hidden storage mode and it is determined that a user who sends the operation instruction is an authorized user; and transmit encryption-processed data to a storing unit; and the storing unit, configured to obtain the encryption-processed data that is transmitted by the encryption processing unit, and store the encryption-processed data in a storage area in the user terminal, where the storage area is used to store encrypted data.

With reference to the third aspect, in a first possible implementation manner of the third aspect, the storing unit is further configured to, when it is determined that the storage mode of the data is a non-hidden storage mode, store the data in a storage area other than the storage area used to store the encrypted data in the user terminal.

With reference to the third aspect, in a second possible implementation manner of the third aspect, the non-default hidden storage mode includes a selective hidden storage mode; the apparatus further includes a receiving unit, configured to receive a storage instruction for performing security protection for the data stored in the storage area other than the storage area used to store the encrypted data; and the encryption processing unit is specifically configured to perform, on the data for which security protection is to be performed, encryption processing based on the key and according to the storage instruction.

With reference to the third aspect and the first to the second possible implementation manners of the third aspect, in a third possible implementation manner of the third aspect, the encryption processing unit is specifically configured to determine the key in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

With reference to the third aspect and the first to the second possible implementation manners of the third aspect, in a fourth possible implementation manner of the third aspect, the encryption processing unit is further configured to perform decryption processing on the data based on a key when a cancellation instruction sent by the user is received and it is determined that the user who sends the cancellation instruction is an authorized user, where the cancellation instruction is an instruction for canceling the hidden storage mode for any data stored in the storage area used to store the encrypted data.

With reference to the third aspect and the first to the fourth possible implementation manners of the third aspect, in a fifth possible implementation manner of the third aspect, the encryption processing unit is specifically configured to determine, in the following manner, that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.

According to a fourth aspect, a data reading apparatus is provided and includes: a receiving unit, configured to receive a reading instruction for reading data in a user terminal, and transmit the reading instruction to an obtaining unit; the obtaining unit, configured to receive the reading instruction transmitted by the receiving unit; when it is determined that a storage mode of the data is a hidden storage mode and it is determined that a user who sends the reading instruction is an authorized user, obtain the data from a storage area used to store encrypted data; and transmit the obtained data to a decryption processing unit; the decryption processing unit, configured to receive the data transmitted by the obtaining unit, perform decryption processing on the obtained data based on a key, and transmit decryption-processed data to a presenting unit; and the presenting unit, configured to obtain the data transmitted by the decryption processing unit and present the decryption-processed data to the user.

With reference to the fourth aspect, in a first possible implementation manner of the fourth aspect, the decryption processing unit is specifically configured to determine the key in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

With reference to the fourth aspect and the first possible implementation manner of the fourth aspect, in a second possible implementation manner of the fourth aspect, the obtaining unit is specifically configured to determine, in the following manner, determine that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.

According to a fifth aspect, a data storing device is provided and includes: a memory, configured to store a program instruction, and transmit the stored program instruction to a signal processor; and obtain encryption-processed data that is transmitted by the signal processor, and store the encryption-processed data; and the signal processor, configured to obtain the program instruction stored in the memory, and perform the following operations according to the obtained program instruction: performing encryption processing on data based on a key when it is determined that a storage mode of the data in a user terminal is a set default hidden storage mode; or receiving an operation instruction for performing security protection for data in a user terminal, and performing, on data for which security protection is to be performed, encryption processing based on a key when it is determined that a storage mode of the data is a non-default hidden storage mode and it is determined that a user who sends the operation instruction is an authorized user; and transmitting encryption-processed data to the memory.

With reference to the fifth aspect, in a first possible implementation manner of the fifth aspect, the memory is further configured to, when it is determined that the storage mode of the data is a non-hidden storage mode, store the data in a storage area other than the storage area used to store the encrypted data in the user terminal.

With reference to the fifth aspect, in a second possible implementation manner of the fifth aspect, the non-default hidden storage mode includes a selective hidden storage mode; and the signal processor is further configured to receive a storage instruction for performing security protection for the data stored in the storage area other than the storage area used to store the encrypted data; and perform, on the data for which security protection is to be performed, encryption processing based on the key and according to the storage instruction.

With reference to the fifth aspect and the first to the second possible implementation manners of the fifth aspect, in a third possible implementation manner of the fifth aspect, the signal processor is specifically configured to determine the key in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

With reference to the fifth aspect and the first to the second possible implementation manners of the fifth aspect, in a fourth possible implementation manner of the fifth aspect, the signal processor is further configured to perform decryption processing on the data based on a key when a cancellation instruction sent by the user is received and it is determined that the user who sends the cancellation instruction is an authorized user, where the cancellation instruction is an instruction for canceling the hidden storage mode for any data stored in the storage area used to store the encrypted data.

With reference to the fifth aspect and the first to the fourth possible implementation manners of the fifth aspect, in a fifth possible implementation manner of the fifth aspect, the signal processor is specifically configured to determine, in the following manner, that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.

According to a sixth aspect, a data reading device is provided and includes: an interface, configured to receive a reading instruction for reading data in a user terminal, and transmit the reading instruction to a signal processor; a memory, configured to store program code, transmit the stored program code to the signal processor, and store encryption-processed data; and the signal processor, configured to obtain the program code stored in the memory, and perform the following operations according to the obtained program code: receiving the reading instruction transmitted by the interface; when it is determined that a storage mode of the data is a hidden storage mode and it is determined that a user who sends the reading instruction is an authorized user, obtaining the data from a storage area used to store encrypted data; and performing decryption processing on the obtained data based on a key, and presenting decryption-processed data to the user.

With reference to the sixth aspect, in a first possible implementation manner of the sixth aspect, the signal processor is specifically configured to determine the key in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

With reference to the sixth aspect and the first possible implementation manner of the sixth aspect, in a second possible implementation manner of the sixth aspect, the signal processor is specifically configured to determine, in the following manner, that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.

In the technical solutions provided in the present invention, when data is to be stored, if it is determined that a storage mode of the data in a user terminal is a set default hidden storage mode, encryption processing is performed on the to-be-stored data based on a key; or encryption processing is performed on the data based on a key when an operation instruction is received and a user who sends the operation instruction is an authorized user; encryption-processed data is stored in a specified area; and when the data in the user terminal is to be read, decryption processing is performed on the stored data and decryption-processed stored data is presented to the user only if it is determined that a user who sends a reading instruction is an authorized user. In this way, the following problems can be properly solved: application of data stored in a user terminal is limited to some extent, and convenience of reading the stored data is relatively poor or security of the data stored in the user terminal is relatively low.

### BRIEF DESCRIPTION OF DRAWINGS

FIG. 1A and FIG. 1B are a flowchart of a data storing method according to Embodiment 1 of the present invention;
FIG. 2a is a schematic diagram of structural composition of a data storing apparatus according to Embodiment 1 of the present invention;
FIG. 2b is a schematic diagram of structural composition of a data storing device according to Embodiment 1 of the present invention;
FIG. 3 is a flowchart of a data storing method according to Embodiment 2 of the present invention;
FIG. 4a is a schematic diagram of structural composition of a data storing apparatus according to Embodiment 2 of the present invention; and
FIG. 4b is a schematic diagram of structural composition of a data storing device according to Embodiment 2 of the present invention.

### DESCRIPTION OF EMBODIMENTS

To solve problems that, generally, application of data stored in a user terminal is limited to some extent, convenience of reading the stored data is relatively poor or security of the data stored in the user terminal is relatively low, in the technical solutions provided in embodiments of the present invention, when data is to be stored, if it is determined that a storage mode of the data in a user terminal is a set default hidden storage mode, encryption processing is performed on the to-be-stored data based on a key; or encryption processing is performed on the data based on a key when an operation instruction is received and a user who sends the operation instruction is an authorized user; encryption-processed data is stored in a specified area; and when the data in the user terminal is to be read, decryption processing is performed on the stored data and decryption-processed stored data is presented to the user only if it is determined that a user who sends a reading instruction is an authorized user. In this way, the following problems can be properly solved: application of data stored in a user terminal is limited to some extent, and convenience of reading the stored data is relatively poor or security of the data stored in the user terminal is relatively low.

Main implementation principles, specific implementation manners, and corresponding achievable beneficial effects of the technical solutions in the embodiments of the present invention are described in detail in the following with reference to the accompanying drawings.

Technologies described in this specification are applicable to various communications systems such as current 2G and 3G communications systems and next-generation communications systems, for example, a Global System for Mobile Communications (Global System for Mobile communications, GSM for short), a Code Division Multiple Access (Code Division Multiple Access, CDMA for short) system, a Time Division Multiple Access (Time Division Multiple Access, TDMA for short) system, a Wideband Code Division Multiple Access (Wideband Code Division Multiple Access Wireless, WCDMA for short) system, a Frequency Division Multiple Access (Frequency Division Multiple Addressing, FDMA for short) system, an Orthogonal Frequency-Division Multiple Access (Orthogonal Frequency-Division Multiple Access, OFDMA for short) system, a single carrier FDMA (SC-FDMA) system, a General Packet Radio Service (General Packet Radio Service, GPRS for short) system, a Long Term Evolution (Long Term Evolution, LTE for short) system, and other communications systems of this type.

A user equipment may be a wireless terminal or may be a wired terminal, where the wireless terminal may refer to a device that provides voice and/or data connectivity for a user, a handheld device having a wireless connection function, or other processing devices connected to a wireless modem; the wireless terminal may communicate with one or more core networks via a radio access network (for example, Radio Access Network, RAN for short); the wireless terminal may be a mobile terminal such as a mobile phone (or referred to as a "cellular" phone) and a computer equipped with a mobile terminal. For example, the wireless terminal may be a portable, pocket-sized, handheld, computer built-in, or vehicle-mounted mobile apparatus, and they exchange languages and/or data with the radio access network, such as a personal communication service (Personal Communication Service, PCS for short) phone, a cordless phone, a Session Initiation Protocol (SIP) phone set, a wireless local loop (Wireless Local Loop, WLL for short) station, or a personal digital assistant (Personal Digital Assistant, PDA for short), or other devices. The wireless terminal may also be referred to as a system, a subscriber unit (Subscriber Unit), a subscriber station (Subscriber Station), a mobile station (Mobile Station), a mobile station (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

### Embodiment 1

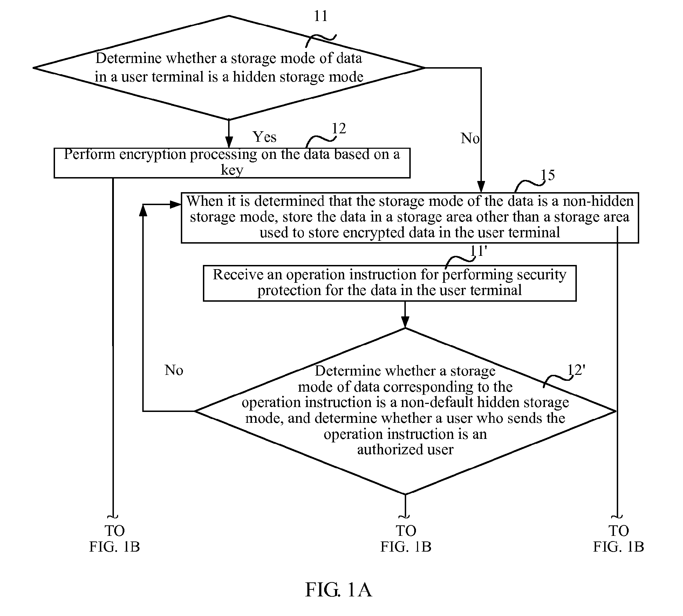

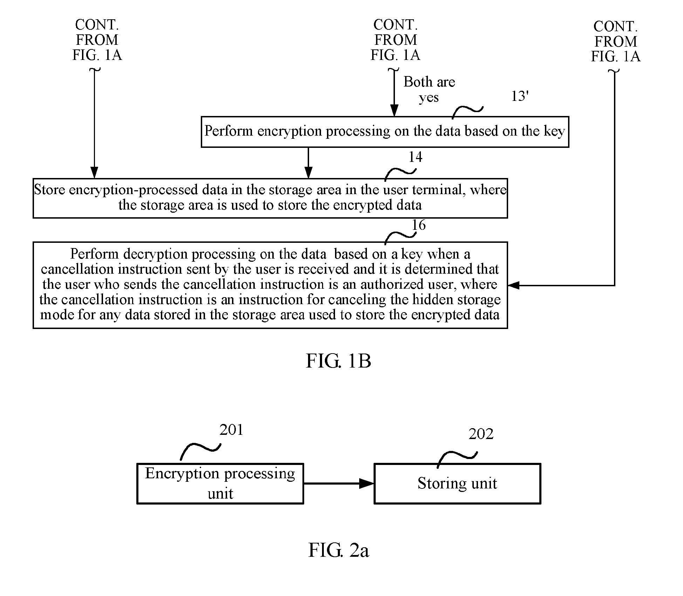

Embodiment 1 of the present invention provides a data storing method. As shown in FIG. 1A and FIG. 1B, a processing procedure of the method is specifically as follows:

Step 11: Determine whether a storage mode of data in a user terminal is a hidden storage mode. If a result of the determining is yes, step 12 is performed; otherwise, step 15 is performed.

In the technical solution provided in Embodiment 1 of the present invention, the data in the user terminal may include data that has already been stored in the user terminal and may also include data that is newly received but has not been stored in the user terminal. The data includes address book information, a photo, a video, an SMS message, a work log, and the like, in the user terminal.

For data for which security protection needs to be performed in a terminal, for example, when a holder of a user terminal leases or lends the user terminal to others, it is not expected that a borrower sees some data in the user terminal. In this case, the data in the user terminal may be stored in a hidden storage mode. In this way, without permission of the holder of the user terminal, the borrower cannot know the data stored in the hidden storage mode.

The hidden storage mode may be that: a user (the user is a legitimate holder of the user terminal) presets the user terminal based on a preset rule, and sets the data in the user terminal to a default hidden storage mode. Only an authorized user can perform operations, such as viewing, deleting and moving, on the data stored in a hidden mode. An unauthorized user cannot view or perform an operation on the data stored in the hidden storage mode even if the unauthorized user obtains the user terminal.

Step 12: Perform encryption processing on the data based on a key, and perform step 14 for encryption-processed data.

In the technical solution provided in Embodiment 1 of the present invention, for the data for which security protection needs to be performed in the terminal, for example, when the holder of the user terminal leases or lends the user terminal to others, it is not expected that the borrower sees some data in the user terminal. In this case, the data in the user terminal may be stored in the hidden storage mode. In this way, without permission of the holder of the user terminal, the borrower cannot know the data stored in the hidden storage mode.

The hidden storage mode may be that: a user (the user is a legitimate holder of the user terminal) presets the user terminal based on a preset rule, and sets the data in the user terminal to a default hidden storage mode that is default. The hidden storage mode may also be that: a user presets the user terminal based on a preset rule, and sets the data in the user terminal to a non-default hidden storage mode that is non-default. For example, for the default hidden mode, when the data in the user terminal such as a photo taken by using a camera of the user terminal is stored, encryption processing is performed on the photo based on a key.

Step 11': Receive an operation instruction for performing security protection for the data in the user terminal.

For the non-default hidden mode, if security protection needs to be performed for data collected by the terminal, a corresponding operation instruction needs to be received. In the technical solution provided in Embodiment 1 of the present invention, the data for which security protection is to be performed in the user terminal is obtained, for example, may be data obtained during document editing in the user terminal or data obtained from an address book, and it is determined whether the data for which security protection is to be performed needs to be stored in a hidden storage mode.

Step 12': Determine whether a storage mode of data corresponding to the operation instruction is a non-default hidden storage mode, and determine whether a user who sends the operation instruction is an authorized user. If results of the determining both are yes, step 13' is performed; otherwise, step 15 is performed.

Step 13': When it is determined that the storage mode of the data is a non-default hidden storage mode and it is determined that the user who sends the operation instruction is an authorized user, perform, on the data for which security protection is to be performed, encryption processing based on a key.

The non-default hidden storage mode may further include a selective hidden storage mode. The selective hidden storage mode means that: it is further determined, according to a storage instruction of the authorized user, whether the data for which security protection is to be performed needs to be stored in a hidden storage mode. For the selective hidden mode, a storage instruction for performing security protection for data stored in a storage area other than a storage area used to store encrypted data may be received; and then encryption processing is performed, based on the key and according to the storage instruction, on the data for which security protection is to be performed.

In specific implementation, in steps 11' to 13', the data in the user terminal is stored in the non-default hidden storage mode, and steps 11 to 12 are execution steps in which the data in the user terminal is stored in the default hidden storage mode. Therefore, there is no strict execution order between the two.

Step 14: Store encryption-processed data in a storage area in the user terminal, where the storage area is used to store encrypted data.

For the default hidden storage mode and the non-default hidden storage mode, after the data in the user terminal is encrypted, the encryption-processed data is stored in the storage area in the user terminal, where the storage area is used to store the encrypted data.

Step 15: When it is determined that the storage mode of the data is a non-hidden storage mode, store the data in a storage area other than the storage area used to store the encrypted data in the user terminal.

In the foregoing steps 11 to 15 and steps 11' to 13', the user may be categorized into an authorized user and an unauthorized user. The authorized user generally refers to a user who is allowed to view or perform an operation on the data stored in a hidden storage mode in the user terminal, and generally refers to a holder of the user terminal. The unauthorized user refers to a user who is not allowed to view or perform an operation on the data stored in a hidden storage mode in the user terminal, and generally may be a borrower of the user terminal or a user who steals the user terminal.

The key is determined in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

Specifically, the authorized user may be implemented by means of registration in the user terminal. For ease of differentiation, an unregistered authorized user is referred to as a registering user, and the key may be determined in the following manner: obtaining biological information of the registering user when a registration instruction sent by the registering user is received; after the obtained biological information is processed, determining that the registering user is an authorized user, and storing processed biological information of the registering user; and obtaining the biological information of the registering user, processing the obtained biological information based on a biometric recognition method and/or a cryptographic method, and then generating the key.

Optionally, after step 15 of storing the encryption-processed data in the storage area in the user terminal, where the storage area is used to store the encrypted data, the method may further include:

Step 16: Perform decryption processing on the data based on a key when a cancellation instruction sent by the user is received and it is determined that the user who sends the cancellation instruction is an authorized user, where the cancellation instruction is an instruction for canceling the hidden storage mode for any data stored in the storage area used to store the encrypted data.

It may be determined, in the following manner, that the user is an authorized user.

Step 1: Obtain sent biological information of the user.

The biological information of the user includes information such as a fingerprint, an iris, a facial feature, a gesture, a three-dimensional scanning image, and a human face.

Step 2: Process the obtained biological information based on a biometric recognition method.

After the obtained biological information is processed based on the biometric recognition method, a hash operation is performed to determine a hash value corresponding to the obtained biological information.

The processing the obtained biological information based on a biometric recognition method is a common technology, and is not detailed again in Embodiment 1 of the present invention.

Step 3: When it is determined that the obtained biological information is consistent with biological information that is of an authorized user and is pre-stored in the user terminal, determine that the user is the authorized user.

According to a correspondence between a hash value and an authorized user, it may be determined whether a user corresponding to a calculated hash value is an authorized user, where the correspondence is pre-stored in the user terminal.

In this step, the pre-stored correspondence between a hash value and an authorized user may be indexed based on the hash value obtained by means of the operation, so as to determine whether the hash value obtained by means of the operation exists, and on a condition that the hash value obtained by means of the operation exists, determine whether the user corresponding to the hash value is an authorized user. The correspondence between a hash value and an authorized user may be preset by the holder of the user, where the correspondence is pre-stored in the user terminal. Its specific principle is that: the holder of the user terminal determines all users who can view and perform an operation on the data stored in the user terminal; biological information of the determined users is collected by using the user terminal and based on the biometric recognition method; the biological information is processed and then a hash operation is performed, and an obtained hash value and information about whether a corresponding user is an authorized user are stored in the user terminal in a corresponding manner.

A storage area in the user terminal may include: an identity information storage area that is used to store the correspondence between a hash value and an authorized user; an ordinary data storage area that is used to store system data of a system used in the user terminal, and non-encrypted data, that is, store data that is not stored in a hidden storage mode; and further include a storage area used to store encrypted data, which may also be referred to as an encrypted data storage area.

Accordingly, Embodiment 1 of the present invention further provides a data storing apparatus. As shown in FIG. 2a, specific structural composition of the apparatus is described as follows:

An encryption processing unit 201 is configured to perform encryption processing on data based on a key when it is determined that a storage mode of the data in a user terminal is a set default hidden storage mode; or receive an operation instruction for performing security protection for data in a user terminal, and perform, on data for which security protection is to be performed, encryption processing based on a key when it is determined that a storage mode of the data is a non-default hidden storage mode and it is determined that a user who sends the operation instruction is an authorized user; and transmit encryption-processed data to a storing unit 202.

Specifically, the encryption processing unit 201 is specifically configured to determine the key in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

Optionally, the encryption processing unit 201 is further configured to perform decryption processing on the data based on a key when a cancellation instruction sent by the user is received and it is determined that the user who sends the cancellation instruction is an authorized user, where the cancellation instruction is an instruction for canceling a hidden storage mode for any data stored in a storage area used to store encrypted data.

Specifically, the encryption processing unit 201 is specifically configured to determine, in the following manner, that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.

The storing unit 202 is configured to obtain the encryption-processed data that is transmitted by the encryption processing unit 201, and store the encryption-processed data in the storage area in the user terminal, where the storage area is used to store the encrypted data.

Optionally, the storing unit 202 is further configured to, when it is determined that the storage mode of the data is a non-hidden storage mode, store the data in a storage area other than the storage area used to store the encrypted data in the user terminal.

The non-default hidden storage mode includes a selective hidden storage mode; and the apparatus further includes:
a receiving unit, configured to receive a storage instruction for performing security protection for the data stored in the storage area other than the storage area used to store the encrypted data, where the encryption processing unit 201 is specifically configured to perform, on the data for which security protection is to be performed, encryption processing based on the key and according to the storage instruction.

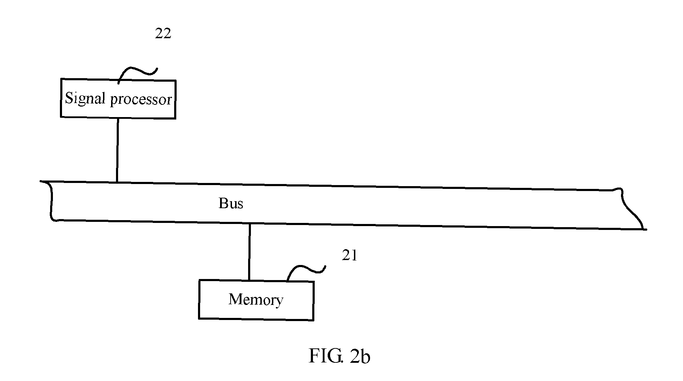

Accordingly, Embodiment 1 of the present invention further provides a data storing device. As shown in FIG. 2b, the device includes a memory 21 and a signal processor 22. The memory 21 is connected to the signal processor 21 by using a bus to transmit data.

The memory 21 is configured to store a program instruction, and transmit the stored program instruction to the signal processor 22; and obtain encryption-processed data that is transmitted by the signal processor 22, and store the encryption-processed data.

The memory 21 may be a volatile memory (volatile memory) such as a random access memory (random-access memory, RAM for short), or a non-volatile memory (non-volatile memory) such as a flash memory (flash memory), a hard disk drive (hard disk drive, HDD for short) or a solid-state drive (solid-state drive, SSD for short), or a combination of the foregoing types of memories.

The signal processor 22 is configured to obtain the program instruction stored in the memory 21, and perform the following operations according to the obtained program instruction: performing encryption processing on data based on a key when it is determined that a storage mode of the data in a user terminal is a set default hidden storage mode; or receiving an operation instruction for performing security protection for data in a user terminal, and performing, on data for which security protection is to be performed, encryption processing based on a key when it is determined that a storage mode of the data is a non-default hidden storage mode and it is determined that a user who sends the operation instruction is an authorized user; and transmitting encryption-processed data to the memory 21.

Optionally, the memory 21 is further configured to, when it is determined that the storage mode of the data is a non-hidden storage mode, store the data in a storage area other than the storage area used to store the encrypted data in the user terminal.

The non-default hidden storage mode includes a selective hidden storage mode; and the signal processor 22 is further configured to receive a storage instruction for performing security protection for the data stored in the storage area other than the storage area used to store the encrypted data; and perform, on the data for which security protection is to be performed, encryption processing based on the key and according to the storage instruction.

Specifically, the signal processor 22 is specifically configured to determine the key in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

Optionally, the signal processor 22 is further configured to perform decryption processing on the data based on a key when a cancellation instruction sent by the user is received and it is determined that the user who sends the cancellation instruction is an authorized user, where the cancellation instruction is an instruction for canceling a hidden storage mode for any data stored in the storage area used to store the encrypted data.

Specifically, the signal processor 22 is specifically configured to determine, in the following manner, that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.

The signal processor 22 may be a central processing unit (central processing unit, CPU for short), or a combination of a CPU and a hardware chip. The signal processor 22 may also be a network processor (network processor, NP for short), or a combination of a CPU and an NP, or a combination of an NP and a hardware chip.

The foregoing hardware chip may be one of or a combination of more of the following: an application-specific integrated circuit (application-specific integrated circuit, ASIC for short), a field-programmable gate array (field-programmable gate array, FPGA for short), and a complex programmable logic device (complex programmable logic device, CPLD for short).

In the technical solution provided in Embodiment 1 of the present invention, when data is to be stored, if it is determined that a storage mode of the data in a user terminal is a set default hidden storage mode, encryption processing is performed on the to-be-stored data based on a key; or encryption processing is performed on the data based on a key when an operation instruction is received and a user who sends the operation instruction is an authorized user; and encryption-processed data is stored in a specified area. In this way, the following problems can be properly solved: application of data stored in a user terminal is limited to some extent, and convenience of reading the stored data is relatively poor or security of the data stored in the user terminal is relatively low.

After a user is sensed based on a biological recognition technology, privacy information is hidden automatically according to an identity of the user, which is suitable for an application scenario in which a user terminal is lent (enabling a hiding function is not required on every occasion of lending, which is convenient and does not arouse repulsion of a borrower). Secondly, an authorized user can obtain all files without using an extra user interface. Thirdly, an offline operation can be performed; a using method is simple; automation is implemented; it is unnecessary to register other accounts online; and a setting process is simple and can take effect in an offline state. The privacy information is stored in an encrypted manner. When the device is lost, others cannot obtain original information in a physical manner. In addition, only a part of information is encrypted, and encryption is performed at a granularity of a single file on every occasion of usage, so that efficiency is high.

### Embodiment 2

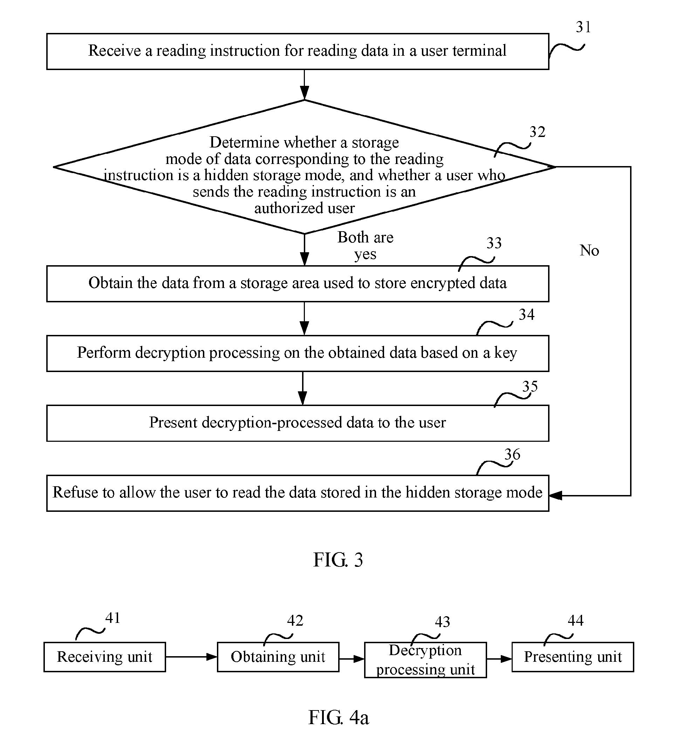

Embodiment 2 of the present invention provides a data reading method. As shown in FIG. 3, a processing procedure of the method is specifically as follows:
Step 31: Receive a reading instruction for reading data in a user terminal.

When data is stored in a user terminal, a storage mode may be categorized into a hidden storage mode and a non-hidden storage mode. For different storage modes, reference may be made to the detailed description in Embodiment 1 in the foregoing, and details are not described again in Embodiment 2 of the present invention.

Step 32: Determine whether a storage mode of data corresponding to the reading instruction is a hidden storage mode, and whether a user who sends the reading instruction is an authorized user. If results of the determining both are yes, step 33 is performed; otherwise, step 36 is performed.

It may be determined, in the following manner, that the user is an authorized user: obtaining sent biological information of the user; and after the obtained biological information is processed based on a biometric recognition method, when it is determined that the obtained biological information is consistent with biological information that is of an authorized user and is pre-stored in the user terminal, determining that the user is the authorized user.

In specific implementation, the biological information of the user may be obtained first. The biological information of the user includes information such as a fingerprint, an iris, and a facial feature. Then, after the obtained biological information is processed based on the biometric recognition method, a hash operation is performed to determine a hash value corresponding to the obtained biological information; and according to a correspondence between a hash value and an authorized user, it is determined whether a user corresponding to a calculated hash value is an authorized user, where the correspondence is pre-stored in the user terminal.

In this step, the pre-stored correspondence between a hash value and an authorized user may be indexed based on the hash value obtained by means of the operation, so as to determine whether the hash value obtained by means of the operation exists, and on a condition that the hash value obtained by means of the operation exists, determine whether the user corresponding to the hash value is an authorized user. The correspondence between a hash value and an authorized user may be preset by a holder of the user, where the correspondence is pre-stored in the user terminal. Its specific principle is that: the holder of the user terminal determines all users who can view and perform an operation on the data stored in the user terminal; biological information of the determined users is collected by using the user terminal and based on the biometric recognition method; the biological information is processed and then a hash operation is performed, and an obtained hash value and information about whether a corresponding user is an authorized user are stored in the user terminal in a corresponding manner.

Step 33: When it is determined that the storage mode of the data is a hidden storage mode and it is determined that the user who sends the reading instruction is an authorized user, obtain the data from a storage area used to store encrypted data.

Step 34: Perform decryption processing on the obtained data based on a key.

Decryption processing is performed, based on the generated key, on to-be-read data stored in a hidden storage mode in the user terminal.

Step 35: Present decryption-processed data to the user.

Step 36: When it is determined that the user is not an authorized user, refuse to allow the user to read the data stored in the hidden storage mode.

In the foregoing steps 31 to 36, the user may include a registering user, and the key is determined in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

Specifically, for a specific implementation manner of determining the key, reference is made to the detailed description in Embodiment 1 in the foregoing, and details are not described again in Embodiment 2 of the present invention.

Accordingly, Embodiment 2 of the present invention further provides a data reading apparatus. As shown in FIG. 4a, specific structural composition of the apparatus is described as follows:

A receiving unit 41 is configured to receive a reading instruction for reading data in a user terminal, and transmit the reading instruction to an obtaining unit 42.

The obtaining unit 42 is configured to receive the reading instruction transmitted by the receiving unit; when it is determined that a storage mode of the data is a hidden storage mode and it is determined that a user who sends the reading instruction is an authorized user, obtain the data from a storage area used to store encrypted data; and transmit the obtained data to a decryption processing unit 43.

Specifically, the obtaining unit 43 is specifically configured to determine, in the following manner, that the user is an authorized user: obtaining sent biological information of the user; and after the obtained biological information is processed based on a biometric recognition method, when it is determined that the obtained biological information is consistent with biological information that is of an authorized user and is pre-stored in the user terminal, determining that the user is the authorized user.

The decryption processing unit 43 is configured to receive the data transmitted by the obtaining unit, perform decryption processing on the obtained data based on a key, and transmit decryption-processed data to a presenting unit 44.

Specifically, the decryption processing unit 43 is specifically configured to determine the key in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

The presenting unit 44 is configured to obtain the data transmitted by the decryption processing unit and present the decryption-processed data to the user.

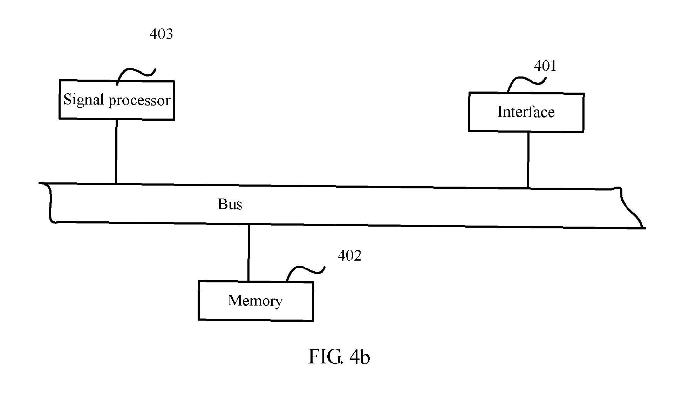

Accordingly, Embodiment 2 of the present invention further provides a data reading device. As shown in FIG. 4b, the device includes an interface 401, a memory 402, and a signal processor 403. The interface 401, the memory 402, and the signal processor 403 are connected by using a bus to transmit data.

The interface 401 is configured to receive a reading instruction for reading data in a user terminal, and transmit the reading instruction to the signal processor 403.

The memory 402 is configured to store program code, transmit the stored program code to the signal processor 403, and store encryption-processed data.

The memory may be a volatile memory (volatile memory) such as a random access memory (random-access memory, RAM for short), or a non-volatile memory (non-volatile memory) such as a flash memory (flash memory), a hard disk drive (hard disk drive, HDD for short) or a solid-state drive (solid-state drive, SSD for short), or a combination of the foregoing types of memories.

The signal processor 403 is configured to obtain the program code stored in the memory 402, and perform the following operations according to the obtained program code: receiving the reading instruction transmitted by the interface 401, and when it is determined that a storage mode of the data is a hidden storage mode and it is determined that a user who sends the reading instruction is an authorized user, obtaining the data from a storage area used to store encrypted data; and performing decryption processing on the obtained data based on a key, and presenting decryption-processed data to the user.

Specifically, the signal processor 403 is specifically configured to determine the key in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

Specifically, the signal processor 403 is specifically configured to determine, in the following manner, that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.

The signal processor may be a central processing unit (central processing unit, CPU for short), or a combination of a CPU and a hardware chip. The signal processor may also be a network processor (network processor, NP for short), or a combination of a CPU and an NP, or a combination of an NP and a hardware chip.

The foregoing hardware chip may be one of or a combination of more of the following: an application-specific integrated circuit (application-specific integrated circuit, ASIC for short), a field-programmable gate array (field-programmable gate array, FPGA for short), and a complex programmable logic device (complex programmable logic device, CPLD for short).

In the technical solution provided in Embodiment 2 of the present invention, when data is to be read, if it is determined that a storage mode of the data in a user terminal is a set hidden storage mode and a user who sends an operation instruction is an authorized user, decryption processing is performed on the stored data and then decryption-processed stored data is presented to the user. In this way, the following problems can be properly solved: application of data stored in a user terminal is limited to some extent, and convenience of reading the stored data is relatively poor or security of the data stored in the user terminal is relatively low.

After a user is sensed based on a biological recognition technology, privacy information is hidden automatically according to an identity of the user, which is suitable for an application scenario in which a user terminal is lent (enabling a hiding function is not required on every occasion of lending, which is convenient and does not arouse repulsion of a borrower). Secondly, an authorized user can obtain all files without using an extra user interface. Thirdly, an offline operation can be performed; a using method is simple; automation is implemented; it is unnecessary to register other accounts online; and a setting process is simple and can take effect in an offline state. The privacy information is stored in an encrypted manner. When the device is lost, others cannot obtain original information in a physical manner. In addition, only a part of information is encrypted, and encryption is performed at a granularity of a single file on every occasion of usage, so that efficiency is high.

### Embodiment 3

On the basis of Embodiment 1 and Embodiment 2 in the foregoing, for different data in a user terminal and different storage modes of the data in the user terminal, Embodiment 3 of the present invention further provides data storing and reading methods, which are detailed as follows:

The data in the user terminal may include data that has already been stored in the user terminal and may also include data that is newly received but has not been stored in the user terminal. When the data is stored in the user terminal, a storage mode may be categorized into a hidden storage mode and a non-hidden storage mode. Then:

For the data that is newly received but has not been stored in the user terminal, if a storage mode of the data is a selective hidden storage mode, encryption may be performed on the data when the data is to be stored, and the data may be directly stored into an ordinary data storage area in the user terminal. For the data stored in the ordinary data storage area, both an authorized user and an unauthorized user can read the stored data and perform an operation on the stored data. For example, for a work log that is newly entered in the user terminal, if a storage mode corresponding to the newly entered work log is a selective hidden storage mode, the newly entered work log is directly stored into the ordinary data storage area.

Optionally, for the data that is newly received but has not been stored in the user terminal, if the data is stored in a hidden storage mode, it is determined whether a user, who sends a storage instruction for storing the data in a selective hidden storage mode, is an authorized user; and when it is determined that the user is an authorized user, a key is generated for the user, encryption processing is performed, based on the generated key and according to the storage instruction, on data for which security protection is to be performed, and encryption-processed data is stored in a storage area used to store encrypted data in the user terminal. When the data stored in the storage area used to store the encrypted data is viewed and an operation is performed on the data, whether a user who sends a reading instruction is an authorized user also needs to be determined. When it is determined that the user is an authorized user, a key is generated for the user, decryption processing is performed, based on the generated key, on to-be-read data stored in a hidden storage mode in the user terminal, and decryption-processed data is presented to the user.

For the data that has already been stored in the user terminal, if a storage mode of the data is a selective hidden storage mode, it is determined whether a user, who sends a storage instruction for storing the data in a selective hidden storage mode, is an authorized user; and when it is determined that the user is an authorized user, a key is generated for the user, encryption processing is performed, based on the generated key and according to the storage instruction, on data for which security protection is to be performed, and encryption-processed data is stored in a storage area used to store encrypted data in the user terminal. When the data stored in the storage area used to store the encrypted data is viewed and an operation is performed on the data, whether a user who sends a reading instruction is an authorized user also needs to be determined. When it is determined that the user is an authorized user, a key is generated for the user, decryption processing is performed, based on the generated key, on to-be-read data stored in a hidden storage mode in the user terminal, and decryption-processed data is presented to the user.

For details about how to determine whether the user, who sends the storage instruction for storing the data in a selective hidden storage mode, is an authorized user, reference is made to the detailed descriptions in Embodiment 1 and Embodiment 2 in the foregoing, and details are not described again in Embodiment 3 of the present invention.

The data in the user terminal may include data that has already been stored in the user terminal and may also include data that is newly received but has not been stored in the user terminal. When the data is stored in the user terminal, a storage mode may be categorized into a hidden storage mode and a non-hidden storage mode. The hidden storage mode may further be categorized into a selective hidden storage mode and a non-selective storage mode. In the non-selective storage mode:

For the data that is newly received but has not been stored in the user terminal, if a storage mode of the data is a non-selective hidden storage mode, the data is stored in a hidden storage mode when the data is to be stored. That is, after encryption processing is performed on the data, the data is stored in a storage area used to store encrypted data in the user terminal. In this way, an unauthorized user cannot read the stored data or perform an operation on the stored data.

For the data that has already been stored in the user terminal, if a storage mode of the data is a non-selective hidden storage mode, and when the stored data needs to be modified, a processing manner is the same as a processing manner for the data stored in the selective hidden storage mode. First, it is determined whether a user, who sends a storage instruction for storing the data, is an authorized user; and when it is determined that the user is an authorized user, a key is generated for the user, encryption processing is performed, based on the generated key and according to the storage instruction, on data for which security protection is to be performed, and encryption-processed data is stored in a storage area used to store encrypted data in the user terminal. When the data stored in the storage area used to store the encrypted data is viewed and an operation is performed on the data, whether a user who sends a reading instruction is an authorized user also needs to be determined. When it is determined that the user is an authorized user, a key is generated for the user, decryption processing is performed, based on the generated key, on to-be-read data stored in a hidden storage mode in the user terminal, and decryption-processed data is presented to the user.

For details about how to determine whether the user, who sends the storage instruction for storing the data in a selective hidden storage mode, is an authorized user, reference is made to the detailed descriptions in Embodiment 1 and Embodiment 2 in the foregoing, and details are not described again in Embodiment 3 of the present invention.

In the technical solution provided in each of the foregoing embodiments of the present invention, after a user is sensed based on a biological recognition technology, privacy information is hidden automatically according to an identity of the user, which is suitable for an application scenario in which a user terminal is lent (enabling a hiding function is not required on every occasion of lending, which is convenient and does not arouse repulsion of a borrower). Secondly, an authorized user can obtain all files without using an extra user interface. Thirdly, an offline operation can be performed; a using method is simple; automation is implemented; it is unnecessary to register other accounts online; and a setting process is simple and can take effect in an offline state. The privacy information is stored in an encrypted manner. When the device is lost, others cannot obtain original information in a physical manner. In addition, only a part of information is encrypted, and encryption is performed at a granularity of a single file on every occasion of usage, so that efficiency is high.

Persons skilled in the art should understand that the embodiments of the present invention may be provided as a method, an apparatus (a device), or a computer program product. Therefore, the present invention may be implemented in the form of an embodiment that completely involves hardware, an embodiment that completely involves software, or an embodiment that combines software and hardware. In addition, the present invention may be in the form of a computer program product implemented on one or more computer-usable storage media (including but without being limited to a disk memory, a CD-ROM, an optical memory, and the like) that includes computer-usable program code.

The present invention is described with reference to the flowcharts and/or the block diagrams of the method, the apparatus (the device), and the computer program product according to the embodiments of the present invention. It should be understood that computer program instructions may be used to implement each procedure and/or block in the flowcharts and/or the block diagrams, or a combination of procedures and/or blocks in the flowcharts and/or the block diagrams. The computer program instructions may be provided for a processor of a universal computer, a dedicated computer, an embedded processor, or another programmable data processing device to generate a machine, so that by means of instructions executed by the processor of the computer or the another programmable data processing device, an apparatus that is configured to implement functions specified in one or more procedures in the flowcharts and/or one or more blocks in the block diagrams is generated.

The computer program instructions may also be stored in a computer-readable memory capable of impelling a computer or another programmable data processing device to work in a specific manner, so that by means of the instructions stored in the computer-readable memory, a manufactured product that includes an instruction apparatus is generated, where the instruction apparatus implements the functions specified in one or more procedures in the flowcharts and/or one or more blocks in the block diagrams.

The computer program instructions may also be loaded onto a computer or another programmable data processing device, so that a series of operation steps are performed on the computer or the another programmable device to generate processing implemented by the computer, and instructions executed on the computer or the another programmable device provide steps for implementing the functions specified in one or more procedures in the flowcharts and/or one or more blocks in the block diagrams.

Although exemplary embodiments of the present invention have been described, persons skilled in the art may make other changes and modifications to the embodiments once they learn basic creative concepts. Therefore, the attached claims shall be construed as including the exemplary embodiments and all changes and modifications that fall within the scope of the present invention.

It is apparent that persons skilled in the art may make various modifications and variations to the present invention without departing from the spirit and scope of the present invention. Therefore, the present invention is also intended to cover these modifications and variations if these modifications and variations of the present invention fall within the scope of the claims of the present invention and equivalent technologies thereof.

## Claims

1. A data storing method, comprising:
performing encryption processing on data based on a key when it is determined that a storage mode of the data in a user terminal is a set default hidden storage mode; or receiving an operation instruction for performing security protection for data in a user terminal, and performing, on data for which security protection is to be performed, encryption processing based on a key when it is determined that a storage mode of the data is a non-default hidden storage mode and it is determined that a user who sends the operation instruction is an authorized user; and
storing encryption-processed data in a storage area in the user terminal, wherein the storage area is used to store encrypted data.

2. The method according to claim 1, further comprising:
when it is determined that the storage mode of the data is a non-hidden storage mode, storing the data in a storage area other than the storage area used to store the encrypted data in the user terminal.

3. The method according to claim 1, wherein the non-default hidden storage mode comprises a selective hidden storage mode; and
the performing, on data for which security protection is to be performed, encryption processing based on a key comprises:
receiving a storage instruction for performing security protection for the data stored in the storage area other than the storage area used to store the encrypted data; and
performing, on the data for which security protection is to be performed, encryption processing based on the key and according to the storage instruction.

4. The method according to any one of claims 1 to 4, wherein the key is determined in the following manner:
obtaining biological information of the user when a registration instruction sent by the user is received;
after the obtained biological information is processed, determining that the user is an authorized user, and storing processed biological information of the authorized user; and
obtaining the biological information of the authorized user, processing the obtained biological information based on a biometric recognition method and/or a cryptographic method, and then generating the key.

5. The method according to any one of claims 1 to 4, wherein after the storing encryption-processed data in a storage area in the user terminal, wherein the storage area is used to store encrypted data, the method further comprises:
performing decryption processing on the data based on a key when a cancellation instruction sent by the user is received and it is determined that the user who sends the cancellation instruction is an authorized user, wherein the cancellation instruction is an instruction for canceling the hidden storage mode for any data stored in the storage area used to store the encrypted data.

6. The method according to any one of claims 1 to 5, wherein it is determined, in the following manner, that the user is an authorized user:
obtaining sent biological information of the user; and
after the obtained biological information is processed based on the biometric recognition method, when it is determined that the obtained biological information is consistent with biological information that is of an authorized user and is pre-stored in the user terminal, determining that the user is the authorized user.

7. A data reading method, comprising:
receiving a reading instruction for reading data in a user terminal;
when it is determined that a storage mode of the data is a hidden storage mode and it is determined that a user who sends the reading instruction is an authorized user, obtaining the data from a storage area used to store encrypted data;
performing decryption processing on the obtained data based on a key; and
presenting decrypted-processed data to the user.

8. The method according to claim 7, wherein the key is determined in the following manner:
obtaining biological information of the user when a registration instruction sent by the user is received;
after the obtained biological information is processed, determining that the user is an authorized user, and storing processed biological information of the authorized user; and
obtaining the biological information of the authorized user, processing the obtained biological information based on a biometric recognition method and/or a cryptographic method, and then generating the key.

9. The method according to any one of claims 7 to 8, wherein it is determined, in the following manner, that the user is an authorized user:
obtaining sent biological information of the user; and
after the obtained biological information is processed based on the biometric recognition method, when it is determined that the obtained biological information is consistent with biological information that is of an authorized user and is pre-stored in the user terminal, determining that the user is the authorized user.

10. A data storing apparatus, comprising:
an encryption processing unit, configured to perform encryption processing on data based on a key when it is determined that a storage mode of the data in a user terminal is a set default hidden storage mode; or receive an operation instruction for performing security protection for data in a user terminal, and perform, on data for which security protection is to be performed, encryption processing based on a key when it is determined that a storage mode of the data is a non-default hidden storage mode and it is determined that a user who sends the operation instruction is an authorized user; and transmit encryption-processed data to a storing unit; and
the storing unit, configured to obtain the encryption-processed data that is transmitted by the encryption processing unit, and store the encryption-processed data in a storage area in the user terminal, wherein the storage area is used to store encrypted data.

11. The apparatus according to claim 10, wherein the storing unit is further configured to, when it is determined that the storage mode of the data is a non-hidden storage mode, store the data in a storage area other than the storage area used to store the encrypted data in the user terminal.

12. The apparatus according to claim 10, wherein the non-default hidden storage mode comprises a selective hidden storage mode;
the apparatus further comprises:
a receiving unit, configured to receive a storage instruction for performing security protection for the data stored in the storage area other than the storage area used to store the encrypted data; and
the encryption processing unit is specifically configured to perform, on the data for which security protection is to be performed, encryption processing based on the key and according to the storage instruction.

13. The apparatus according to any one of claims 10 to 12, wherein the encryption processing unit is specifically configured to determine the key in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

14. The apparatus according to any one of claims 10 to 13, wherein the encryption processing unit is further configured to perform decryption processing on the data based on a key when a cancellation instruction sent by the user is received and it is determined that the user who sends the cancellation instruction is an authorized user, wherein the cancellation instruction is an instruction for canceling the hidden storage mode for any data stored in the storage area used to store the encrypted data.

15. The apparatus according to any one of claims 10 to 14, wherein the encryption processing unit is specifically configured to determine, in the following manner, that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.

16. A data reading apparatus, comprising:
a receiving unit, configured to receive a reading instruction for reading data in a user terminal, and transmit the reading instruction to an obtaining unit;
the obtaining unit, configured to receive the reading instruction transmitted by the receiving unit; when it is determined that a storage mode of the data is a hidden storage mode and it is determined that a user who sends the reading instruction is an authorized user, obtain the data from a storage area used to store encrypted data; and transmit the obtained data to a decryption processing unit;
the decryption processing unit, configured to receive the data transmitted by the obtaining unit, perform decryption processing on the obtained data based on a key, and transmit decryption-processed data to a presenting unit; and
the presenting unit, configured to obtain the data transmitted by the decryption processing unit and present the decryption-processed data to the user.

17. The apparatus according to claim 16, wherein the decryption processing unit is specifically configured to determine the key in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

18. The apparatus according to any one of claims 16 to 17, wherein the obtaining unit is specifically configured to determine, in the following manner, that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.

19. A data storing device, comprising:
a memory, configured to store a program instruction, and transmit the stored program instruction to a signal processor; and obtain encryption-processed data that is transmitted by the signal processor, and store the encryption-processed data; and
the signal processor, configured to obtain the program instruction stored in the memory, and perform the following operations according to the obtained program instruction: performing encryption processing on data based on a key when it is determined that a storage mode of the data in a user terminal is a set default hidden storage mode; or receiving an operation instruction for performing security protection for data in a user terminal, and performing, on data for which security protection is to be performed, encryption processing based on a key when it is determined that a storage mode of the data is a non-default hidden storage mode and it is determined that a user who sends the operation instruction is an authorized user; and transmitting encryption-processed data to the memory.

20. The device according to claim 19, wherein the memory is further configured to, when it is determined that the storage mode of the data is a non-hidden storage mode, store the data in a storage area other than the storage area used to store the encrypted data in the user terminal.

21. The device according to claim 19, wherein the non-default hidden storage mode comprises a selective hidden storage mode; and
the signal processor is further configured to receive a storage instruction for performing security protection for the data stored in the storage area other than the storage area used to store the encrypted data; and perform, on the data for which security protection is to be performed, encryption processing based on the key and according to the storage instruction.

22. The device according to claim 19 or 20, wherein the signal processor is specifically configured to determine the key in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

23. The device according to claim 19 or 22, wherein the signal processor is further configured to perform decryption processing on the data based on a key when a cancellation instruction sent by the user is received and it is determined that the user who sends the cancellation instruction is an authorized user, wherein the cancellation instruction is an instruction for canceling the hidden storage mode for any data stored in the storage area used to store the encrypted data.

24. The device according to any one of claims 19 to 23, wherein the signal processor is specifically configured to determine, in the following manner, that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.

25. A data reading device, comprising:
an interface, configured to receive a reading instruction for reading data in a user terminal, and transmit the reading instruction to a signal processor;
a memory, configured to store program code, transmit the stored program code to the signal processor, and store encryption-processed data; and
the signal processor, configured to obtain the program code stored in the memory, and perform the following operations according to the obtained program code: receiving the reading instruction transmitted by the interface; when it is determined that a storage mode of the data is a hidden storage mode and it is determined that a user who sends the reading instruction is an authorized user, obtaining the data from a storage area used to store encrypted data; and performing decryption processing on the obtained data based on a key, and presenting decryption-processed data to the user.

26. The device according to claim 25, wherein the signal processor is specifically configured to determine the key in the following manner: obtaining biological information of the user when a registration instruction sent by the user is received; after the obtained biological information is processed, determining that the user is an authorized user, and storing processed biological information of the authorized user; and obtaining the biological information of the authorized user, processing the obtained biological information based on a biometric recognition method and/or a cryptographic method, and then generating the key.

27. The device according to claim 25, wherein the signal processor is specifically configured to determine, in the following manner, that the user is an authorized user: obtaining sent biological information of the user; and after the obtained biological information is processed based on the biometric recognition method, when it is determined that the obtained biological information is consistent with biological information that is of an authorized user and is pre-stored in the user terminal, determining that the user is the authorized user.
